# EUROPEAN PATENT APPLICATION

(11) **EP 4 814 758 A1**
(43) Date of publication of application: **30.09.2026**
(21) Application number: 26164311.8
(22) Date of filing: 12.03.2026
(51) Int. Cl.: G06F 21/10, G06F 21/12

(54) **METHOD, APPARATUS, AND SYSTEM FOR LIBRARY CREATION**

(30) Priority: 26.03.2025 JP 2025051245
(71) Applicant: Seiko Epson Corporation, Tokyo 160-8801 (JP)
(72) Inventor: ARAI, Yuki, Suwa-shi, Nagano, 392-8502 (JP); ADACHI, Mamoru, Suwa-shi, Nagano, 392-8502 (JP)
(74) Representative: MERH-IP Matias Erny Reichl Hoffmann Patentanwälte PartG mbB

(57) **Abstract**

A library creation method includes a first step of acquiring, from an external device, license information to be given to a library including a teaching program for teaching a robot; a second step of displaying a setting input screen for inputting a setting of the license information; a third step of creating the library in accordance with content input on the setting input screen; a fourth step of displaying an identification information input screen for inputting identification information of a device that uses the library; and a fifth step of acquiring an authentication key for activating the library based on the identification information.

## Description

The present application is based on, and claims priority from JP Application Serial Number 2025-051245, filed March 26, 2025, the disclosure of which is hereby incorporated by reference herein in its entirety.

### BACKGROUND

### 1. Technical Field

The present disclosure relates to a method, apparatus, and system for creating a library.

### 2. Related Art

For example, JP-A-2016-200982 discloses a storage system using portable media. To control the provision of functions to be added to a storage that has been introduced and to control the provision of the functions in accordance with the capacity of a storage to be added, the storage system includes library devices with portable media and a storage control server for controlling these devices. The storage control server provides a license key for permitting a function to a portable medium.

In the field of software use, there are needs for the creation and distribution of a library that implements functions developed by a development user and for granting a license to permit use of the library. JP-A-2016-200982 does not describe a system configuration that allows the development user to license a library created by the development user at the development user's own discretion. Therefore, the development user can neither distribute the library only to users known to the development user nor manage the distribution state of the library. This is disadvantageous for safety checking and also lacks convenience.

### SUMMARY

A method for creating a library according to an application example of the present disclosure includes: a first step of acquiring, from an external device, license information to be given to a library; a second step of displaying a setting input screen for inputting a setting of the license information; a third step of creating the library in accordance with content input on the setting input screen; a fourth step of displaying an identification information input screen for inputting identification information of a device that uses the library; and a fifth step of acquiring an authentication key for activating the library based on the identification information.

An apparatus for creating a library according to an application example of the present disclosure includes: a license information acquisition unit configured to acquire, from an external device, license information to be given to a library; a first display unit configured to display a setting input screen for inputting a setting of the license information, and to display an identification information input screen for inputting identification information of a device that uses the library; a creation unit configured to create the library in accordance with content input on the setting input screen; and an authentication key acquisition unit configured to acquire an authentication key for activating the library based on the identification information.

A system for creating a library according to an application example of the present disclosure includes: the apparatus for creating a library according to the application example of the present disclosure and the device that uses the library.

### BRIEF DESCRIPTION OF THE DRAWINGS

FIG. 1 is a block diagram of a system for creating a library (hereinafter referred to as a "library creation system") according to an embodiment of the present disclosure.
FIG. 2 is a functional block diagram of a controller included in an apparatus for creating a library (hereinafter referred to as a "library creation apparatus") illustrated in FIG. 1.
FIG. 3 illustrates an exemplary display screen that is a setting input screen displayed on a display unit of the library creation apparatus illustrated in FIG. 1.
FIG. 4 illustrates an exemplary display screen that is an identification information input screen displayed on the display unit of the library creation apparatus illustrated in FIG. 1.
FIG. 5 illustrates an exemplary display screen that is an identification information input screen displayed on the display unit of the library creation apparatus illustrated in FIG. 1.
FIG. 6 illustrates an exemplary display screen that is an output operation screen displayed on the display unit of the library creation apparatus illustrated in FIG. 1.
FIG. 7 illustrates an exemplary display screen that is a management screen displayed on the display unit of the library creation apparatus illustrated in FIG. 1.
FIG. 8 illustrates an exemplary display screen that is a management screen displayed on a display unit of a user device illustrated in FIG. 1.
FIG. 9 illustrates an exemplary display screen that is an authentication key input screen displayed on the display unit of the user device illustrated in FIG. 1.
FIG. 10 illustrates an exemplary display screen that is an authentication key input screen displayed on the display unit of the user device illustrated in FIG. 1.
FIG. 11 illustrates an exemplary display screen that is a notification screen displayed on the display unit of the user device illustrated in FIG. 1.
FIG. 12 illustrates an exemplary display screen that is an authentication key input screen displayed on the display unit of the user device illustrated in FIG. 1.
FIG. 13 is a flowchart for explaining an exemplary method for creating a library (hereinafter referred to as a "library creation method") according to an embodiment of the present disclosure.

### DESCRIPTION OF EMBODIMENTS

### Embodiments

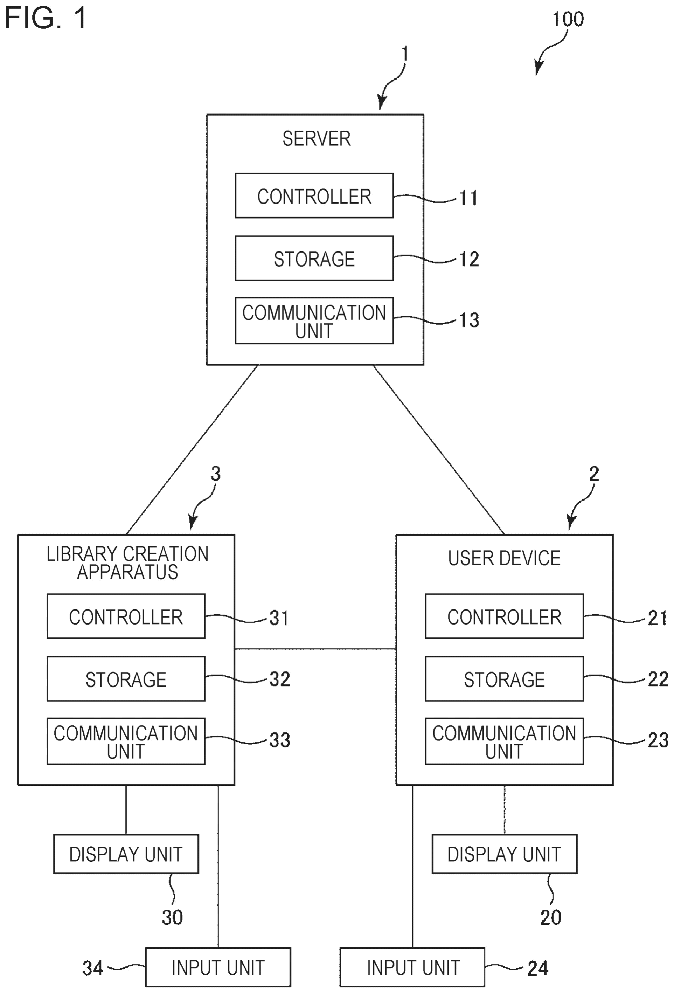

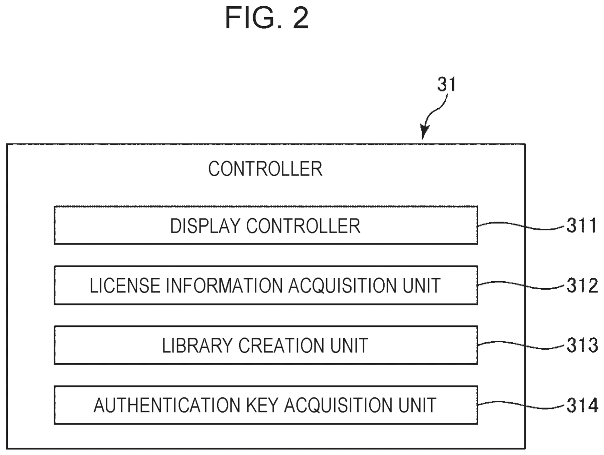

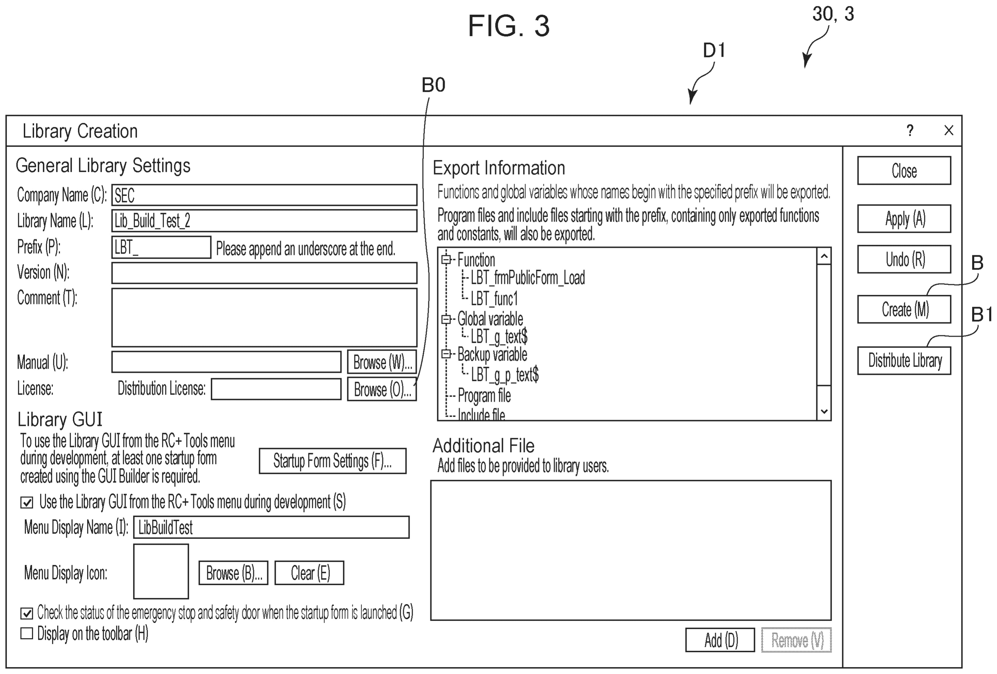

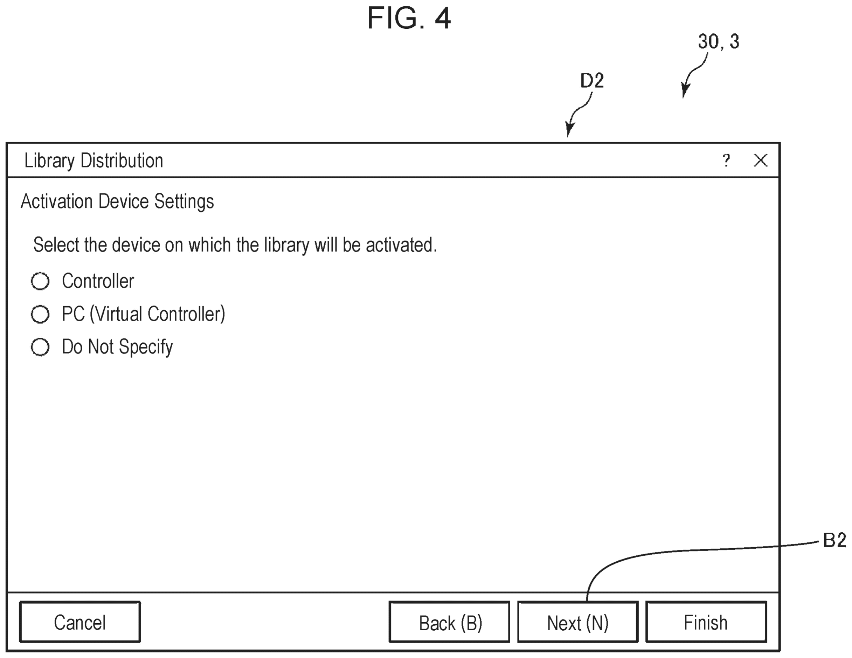

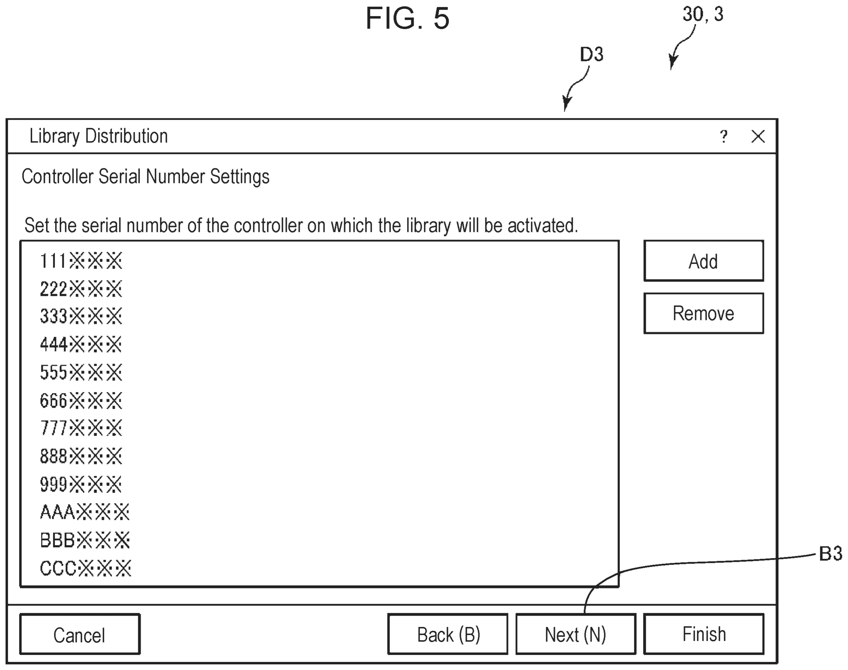

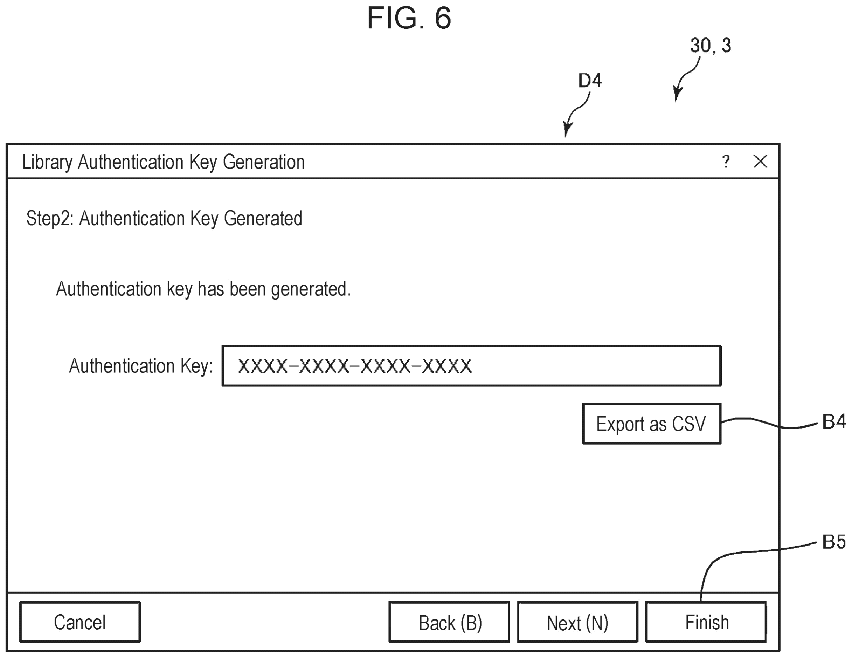

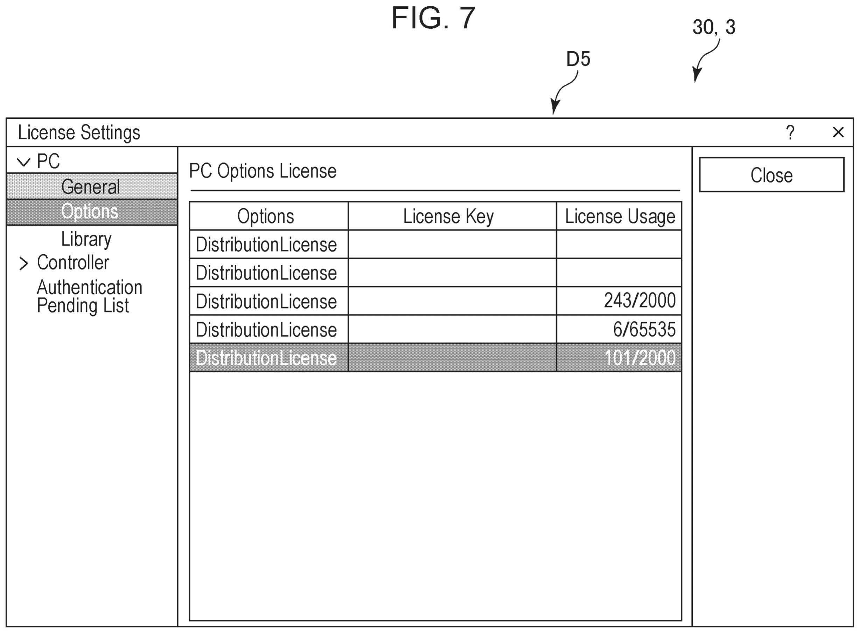

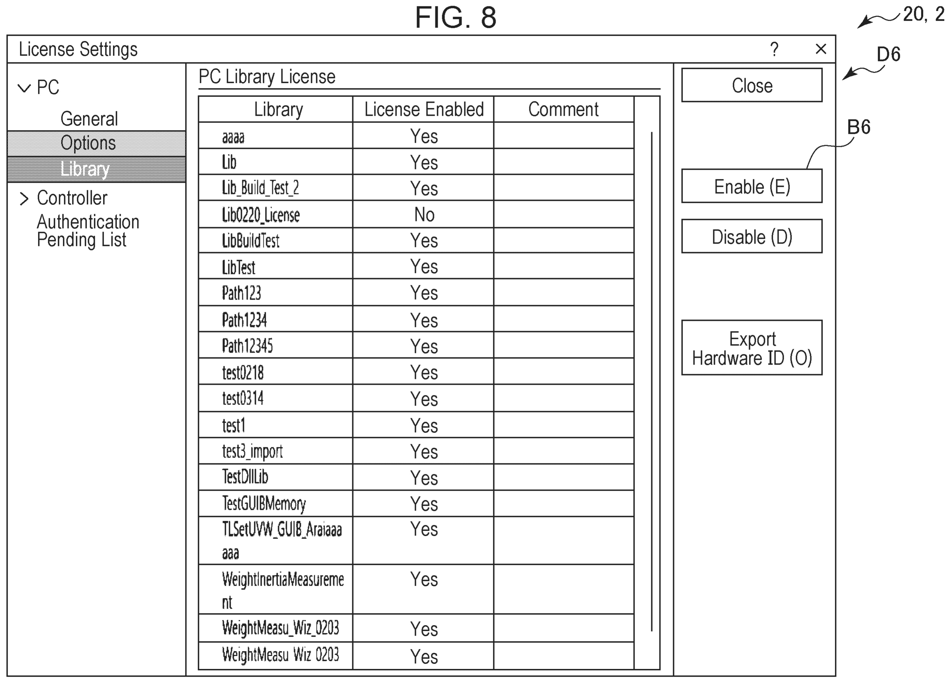

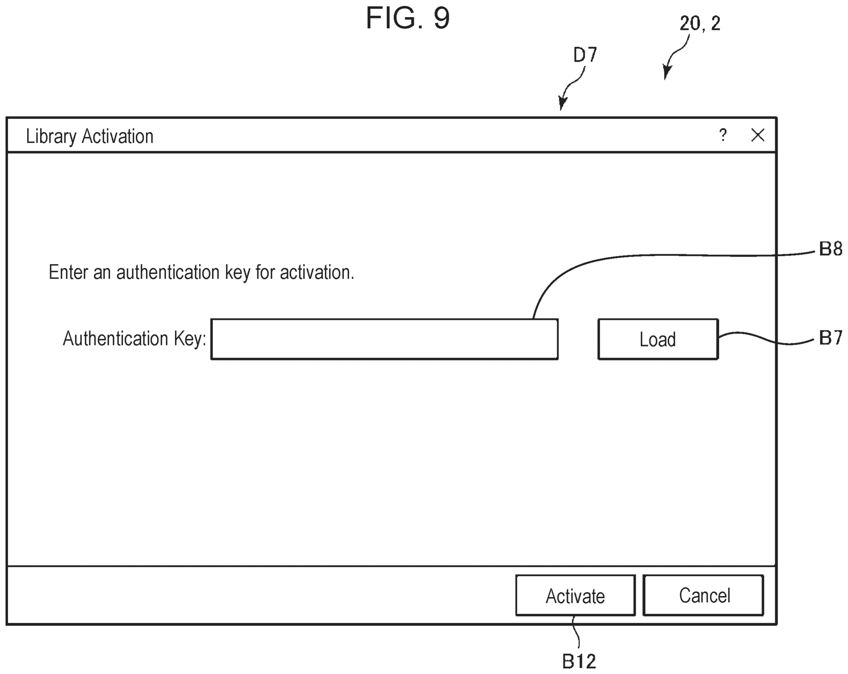

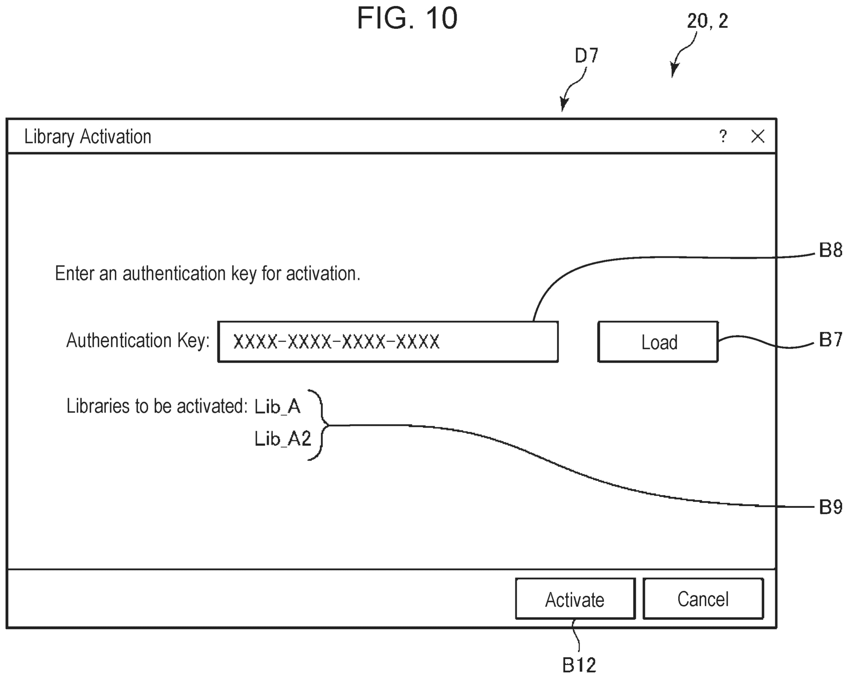

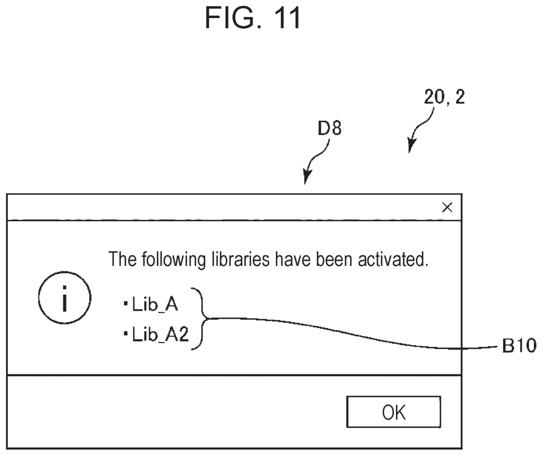

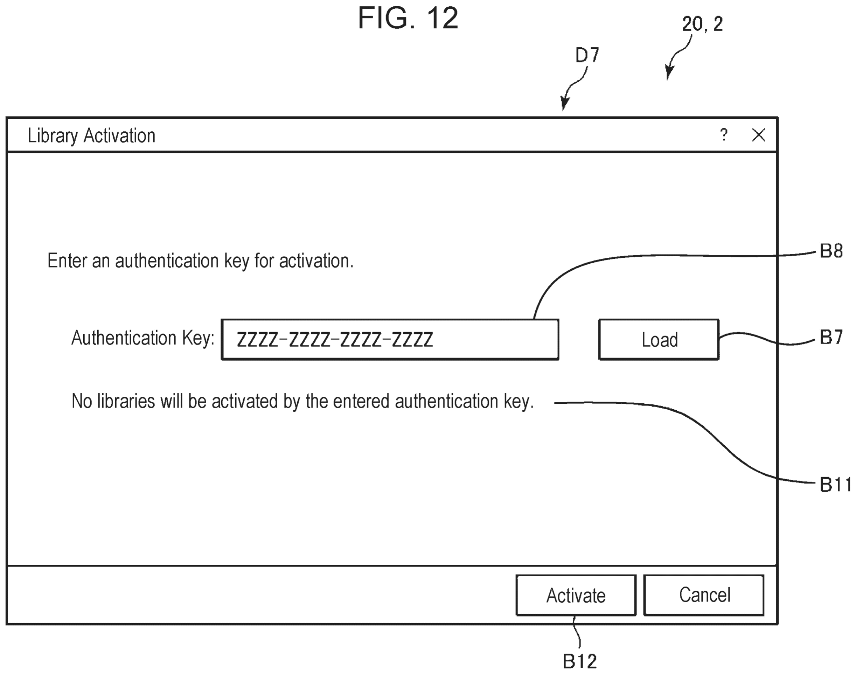

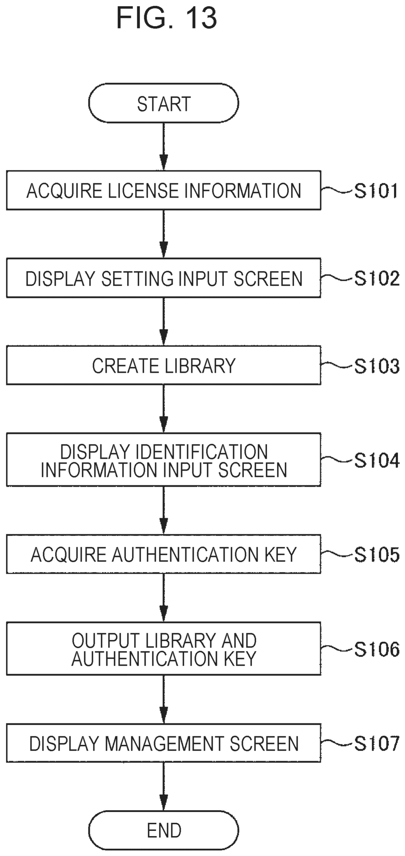

FIG. 1 is a block diagram of a library creation system according to an embodiment of the present disclosure. FIG. 2 is a functional block diagram of a controller included in a library creation apparatus illustrated in FIG. 1. FIG. 3 illustrates an exemplary display screen that is a setting input screen displayed on a display unit (first display unit) of the library creation apparatus illustrated in FIG. 1. FIG. 4 illustrates an exemplary display screen that is an identification information input screen displayed on the display unit (first display unit) of the library creation apparatus illustrated in FIG. 1. FIG. 5 illustrates an exemplary display screen that is the identification information input screen displayed on the display unit (first display unit) of the library creation apparatus illustrated in FIG. 1. FIG. 6 illustrates an exemplary display screen that is an output operation screen displayed on the display unit (first display unit) of the library creation apparatus illustrated in FIG. 1. FIG. 7 illustrates an exemplary display screen that is a management screen displayed on the display unit (first display unit) of the library creation apparatus illustrated in FIG. 1. FIG. 8 illustrates an exemplary display screen that is the management screen displayed on a display unit (second display unit) of a user device illustrated in FIG. 1. FIG. 9 illustrates an exemplary display screen that is an authentication key input screen displayed on the display unit (second display unit) of the user device illustrated in FIG. 1. FIG. 10 illustrates an exemplary display screen that is an authentication key input screen displayed on the display unit (second display unit) of the user device illustrated in FIG. 1. FIG. 11 illustrates an exemplary display screen that is a notification screen displayed on the display unit (second display unit) of the user device illustrated in FIG. 1. FIG. 12 illustrates an exemplary display screen that is an authentication key input screen displayed on the display unit (second display unit) of the user device illustrated in FIG. 1. FIG. 13 is a flowchart for explaining an exemplary library creation method according to an embodiment of the present disclosure.

Hereinafter, the library creation method, the library creation apparatus, and the library creation system of the present disclosure will be described in detail with reference to preferred embodiments illustrated in the accompanying drawings.

As illustrated in FIG. 1, a library creation system 100 includes a server 1 (external device), a user device 2 (device), and a library creation apparatus 3. In the library creation system 100, the library creation apparatus 3 creates a library, distributes the library and an authentication key to the user device 2, and the server 1 and the user device 2 perform management.

A library includes software assets that can be used for application development, and may be in any form, such as classes, functions, function blocks, procedures, and packages. In addition, examples of the format of the library include, but are not limited to, source code, an intermediate representation, an object format, and an execution format.

In the present disclosure, the library relates to a teaching program for teaching a robot. The teaching program is an application for creating chronological position information (posture information) of each portion of a robot arm included in the robot, speed information at each position, work content at each position, and other information.

The application is data including any program. The application is not limited to a program for executing a specific process, and may include a program constituting at least a portion of an operating system (OS).

### Server 1

First, the server 1 will be described.

The server 1 integrally manages the entire library creation system 100 and includes a controller 11, a storage 12, and a communication unit 13. The server 1 is an exemplary external device when viewed from the library creation apparatus 3 or the user device 2.

The controller 11 includes at least one processor. Examples of the processor include a central processing unit (CPU) and a graphics processing unit (GPU). The controller 11 has a function of, for example, performing processing of creating license information.

The storage 12 stores various types of data, such as data on the created license information, data on the library created by the library creation apparatus 3, and data on a distribution destination of the library. The storage 12 includes a volatile storage device, such as a dynamic random access memory (DRAM) or a static random access memory (SRAM), or a nonvolatile storage device, such as a hard disk or a solid state drive (SSD).

The communication unit 13 communicates with each of the user device 2 and the library creation apparatus 3 using, for example, an external interface of a wireless local area network (LAN) to transmit and receive data. The communication unit 13 includes an interface circuit. The communication unit 13 has a function of transmitting license information to the library creation apparatus 3.

### User Device 2

Next, the user device 2 will be described.

The user device 2 receives a library and an authentication key from the server 1 or the library creation apparatus 3. Upon receipt of the library and the authentication key, the authentication key is input to activate and use the library. Hereinafter, a user who uses the user device 2 is also referred to as an end user.

In the present embodiment, the user device 2 is a teaching device that teaches a robot. The robot is not limited, and examples thereof include a floor-standing type or ceiling-suspended type SCARA robot, a vertical articulated robot, a dual-arm robot, and a mobile robot. The type, kind, and the like of the robot are not limited.

Examples of the user device 2 include a desktop or notebook personal computer, a tablet terminal, a smartphone, and a teaching pendant.

The user device 2 includes a display unit 20, a controller 21, a storage 22, a communication unit 23, and an input unit 24.

The display unit 20 is, for example, a liquid crystal display or an organic electroluminescent (EL) display. As will be described later, the display unit 20 is a second display unit that displays display screens such as a management screen D6 illustrated in FIG. 8, authentication key input screens D7 illustrated in FIGS. 9, 10, and 12, and a notification screen D8 illustrated in FIG. 11.

The controller 21 is composed of, for example, a CPU, a GPU, and the like, and reads various programs, such as a teaching program, stored in the storage 22. The storage 22 includes, for example, a read-only memory (ROM) and a random access memory (RAM), and stores the various programs described above.

The communication unit 23 communicates with each of the server 1 and the library creation apparatus 3 using, for example, an external interface of a wired LAN or a wireless LAN to transmit and receive data. The communication unit 23 includes an interface circuit.

The input unit 24 includes a keyboard, a mouse, connectors, an external connection terminal, and the like, allowing an end user to input or select desired information by operating, for example, the keyboard or the mouse.

### Library Creation Apparatus 3

Next, the library creation apparatus 3 will be described.

The library creation apparatus 3, which is an apparatus that executes the library creation method of the present disclosure, creates a library and transmits the library, together with an authentication key, to the user device 2. Hereinafter, a user who uses the library creation apparatus 3 is also referred to as a development user.

The library creation apparatus 3 includes a display unit 30, a controller 31, a storage 32, a communication unit 33, and an input unit 34.

The display unit 30 is a first display unit that displays a setting input screen D1, identification information input screens D2 and D3, an output operation screen D4, a management screen D5, and the like, which will be described later. As the display unit 30, those listed as examples of the display unit 20 may be used.

The controller 31 is composed of, for example, a CPU, a GPU, and the like, and reads various programs and other data stored in the storage 32. Examples of the various programs include a program for executing a library creation method described below.

The storage 32 includes, for example, a ROM and a RAM, and stores the various programs described above.

The communication unit 33 communicates with each of the server 1 and the user device 2 using, for example, an external interface of a wired LAN or a wireless LAN to transmit and receive data. The communication unit 33 includes an interface circuit. As will be described later, the communication unit 33 executes a sixth step of outputting the library created in a third step and the authentication key acquired in a fifth step.

Examples of the input unit 34 include those listed as examples of the input unit 24. The development user can input or select desired information by operating, for example, a keyboard or a mouse.

Next, the functional units of the controller 31 will be described with reference to FIG. 2.

The controller 31 includes, as functional units, a display controller 311, a license information acquisition unit 312, a library creation unit 313, and an authentication key acquisition unit 314. These functional units can be implemented by the hardware configuration example illustrated in FIG. 2.

The display controller 311 reads a display program stored in the storage 32, generates data for various display screens, and controls operation of the display unit 30 to display the various display screens on the display unit 30. Examples of the various display screens include the setting input screen D1 illustrated in FIG. 3, the identification information input screen D2 illustrated in FIG. 4, the identification information input screen D3 illustrated in FIG. 5, the output operation screen D4 illustrated in FIG. 6, and the management screen D5 illustrated in FIG. 7. These display screens will be described in detail later.

The display controller 311 executes a second step of displaying the setting input screen D1 for inputting settings of license information, and a fourth step of displaying the identification information input screens D2 and D3 for inputting identification information of devices that use the library.

The license information acquisition unit 312 executes a first step of acquiring, from the server 1, license information (for example, a license code) to be given to a library.

The license information is information indicating license terms that define use conditions for using a library, and examples of the license information include usage terms, a usage period, and the number of uses during development or use of the library. In the present embodiment, the license information is a code consisting of numbers or letters.

The library creation unit 313 executes the third step of creating a library in accordance with content input on the setting input screen D1. That is, the license information set on the setting input screen D1 is embedded in the library, and a library file indicating the library is created. When a "Create" button B on the setting input screen D1 is pressed, the library creation unit 313 embeds the license information in the library and creates a library file indicating the library. Thus, a library in which the license information is embedded can be created.

The created library is stored in the storage 32.

The setting input screen D1 is displayed on the display unit 30 when needed or in response to an operation of the input unit 34. As illustrated in FIG. 3, displayed on the setting input screen D1 are items for configuring General Library Settings, items for setting Library GUI, items for setting Export Information, the "Create" button B for creating a library file indicating a library, and a button B1 for performing authentication key generation described later.

In the items for General Library Settings, various settings can be configured by inputting values for Company Name, Library Name, Prefix, Version, Comment, Manual, and the like. In addition, in a "License" item, license information can be embedded in the library by pressing a "Browse" button B0 while a license name is input in "Distribution License".

In the items for setting Library GUI, Menu Display Name, Menu Display Icon, and the like can be set.

In the items for setting Export Information, functions, global variables, backup variables, program files, include files, vision sequences, and the like can be set.

When the "Create" button B is pressed after various settings have been performed, a process of embedding the license information in the library is completed, and a library file indicating the library is created in the library creation apparatus 3 and stored in the storage 32.

However, when the button B1 for performing authentication key generation included in the setting input screen D1 is pressed, the identification information input screen D2 is displayed on the display unit 30. The authentication key acquisition unit 314 executes the fifth step of acquiring an authentication key for activating the library based on identification information. The authentication key acquisition unit 314 acquires identification information of the user device 2 input from the identification information input screens D2 and D3. The authentication key acquisition unit 314 then acquires an authentication key based on the acquired identification information.

The identification information may be a serial number of a robot controller, a serial number of a teaching device, or a serial number of another device.

Acquiring an authentication key includes a case where the library creation apparatus 3 creates an authentication key, and another case where the library creation apparatus 3 transmits identification information to a device other than the library creation apparatus 3, such as the server 1, the device creates an authentication key, and the library creation apparatus 3 acquires the authentication key. In the present embodiment, the authentication key acquisition unit 314 creates an authentication key based on identification information.

Then, the identification information input screen D2 is displayed on the display unit 30 when needed or in response to an operation of the input unit 34. As illustrated in FIG. 4, a device on which the library is to be activated can be set on the identification information input screen D2. That is, the type of the user device 2 is input on the identification information input screen D2. On the identification information input screen D2, when any one of "Controller", "PC (Virtual Controller)", and "Do Not Specify" is selected and a "Next (N)" button B2 is pressed, the identification information input screen D3 illustrated in FIG. 5 is displayed on the display unit 30. The identification information input screen D3 may be displayed in response to an operation of the input unit 34.

As illustrated in FIG. 5, a list of serial numbers of controllers is displayed on the identification information input screen D3. When a "Next (N)" button B3 is pressed while any one of the serial numbers is selected, the output operation screen D4 illustrated in FIG. 6 is displayed on the display unit 30. The identification information input screen D3 may be displayed in response to an operation of the input unit 34. The identification information input screen D3 illustrated in FIG. 5 is an example of a case where "Controller" is selected as the type of the user device 2 on the identification information input screen D2. When "PC (Virtual Controller)" is selected as the type of the user device 2, a list of hardware IDs identifying individual PCs may be displayed instead of serial numbers of the controllers. As a hardware ID, for example, an ID that is a combination of a Universally Unique Identifier (UUID) of a Basic Input Output System (BIOS) and a disk serial number (S/N) may be adopted. In addition, in the present embodiment, a list of candidate serial numbers is displayed on the identification information input screen D3. However, the identification information input screen D3 is not limited thereto. For example, a text box prompting a user to input a character string indicating a serial number may be displayed.

Although description has been given of a case where the identification information input screen D2 is displayed and then switches to the identification information input screen D3, the display of these screens is not limited thereto. For example, the identification information input screen D2 and the identification information input screen D3 may be displayed simultaneously in different areas of the display unit 30, may be displayed at any timing, or may be displayed such that the identification information input screen D3 overlaps a portion of the identification information input screen D2, for example, as a pop-up screen in a small window.

From the identification information input screens D2 and D3, an authentication key can be created based on identification information.

The output operation screen D4 is displayed on the display unit 30 when needed or in response to an operation of the input unit 34. As illustrated in FIG. 6, completion of authentication key generation and a character string of the generated authentication key are displayed on the output operation screen D4. An "Export as CSV" button B4 is also displayed on the output operation screen D4. When the "Export as CSV" button B4 is pressed, a CSV format file including the authentication key is created in the library creation apparatus 3 and stored in the storage 32. Here, the file format for generating the authentication key is not limited to the CSV format.

In addition, when a "Finish" button B5 displayed on the output operation screen D4 is pressed, the process of generating the authentication key is completed, and the output operation screen D4 is closed.

Then, the development user outputs or transmits the generated authentication key, together with the library in which the license information is embedded, to the user device 2 or an end user. Note that outputting the library and the authentication key includes a case where the library and the authentication key are directly transmitted from the communication unit 33 to the user device 2 or to an address possessed by the end user using an arbitrary network tool, a case where the library and the authentication key are transmitted from the communication unit 33 to the user device 2 via an external device such as the server 1, and a case where the library and the authentication key are stored in an external storage medium, such as a Universal Serial Bus (USB) memory, and the external storage medium is sent to the end user. In addition, as a specific method of outputting or transmitting the authentication key, for example, a method of transmitting a CSV format file including the authentication key to the user device 2 or the end user, or a method of notifying the end user, using the user device 2, of the character string of the authentication key displayed on the output operation screen D4 may be adopted. In the present embodiment, the communication unit 33 directly transmits a CSV format file including the library and the authentication key to the user device 2.

Output of the library and the authentication key is performed in response to an operation of the input unit 34. In a case where a license file is stored in the storage 32, after the "Finish" button B5 displayed on the output operation screen D4 has been pressed, the library and the authentication key may be automatically output, that is, may be directly transmitted to the user device 2 via email or the like.

On the display unit 30, a management screen D5 for managing license information is displayed in response to an operation of the input unit 34. The management screen D5 may be displayed on the display unit 30 when the "Finish" button B5 displayed on the output operation screen D4 is pressed. As illustrated in FIG. 7, items labelled as Options representing license types, License Key, and License Usage are displayed on the management screen D5. License Usage is displayed as a pair consisting of a number of distributable licenses, which is a maximum number, and a number of currently distributed licenses. For example, as illustrated in the figure, when "1343/2000" is displayed, the maximum number of distributable licenses is 2000 and the number of currently distributed licenses is 1343, which enables grasping information on a number of remaining licenses, which is 657, that can be embedded in the library. The display form is not limited to this. For example, the remaining number of licenses, 657, may be displayed instead of the currently distributed number, 1343.

In such a manner, by displaying information on a number of licenses that have already been distributed or on a number of remaining licenses that can be embedded in the library, a timing at which new license information is to be acquired from the server 1 can be estimated.

As described above, while obtaining necessary information by viewing the setting input screen D1, the identification information input screens D2 and D3, the output operation screen D4, and the management screen D5 displayed on the display unit 30 of the library creation apparatus 3, the development user sequentially performs input operations and the like based on the information, thereby improving convenience and appropriateness of management.

Next, screens displayed on the user device 2 will be described.

The management screen D6 illustrated in FIG. 8, the authentication key input screens D7 illustrated in FIGS. 9 and 10, and the notification screen D8 illustrated in FIG. 11 are sequentially displayed on the user device 2.

When the user device 2 acquires a library and an authentication key, the management screen D6 illustrated in FIG. 8 is displayed on the display unit 20. The management screen D6 may be automatically displayed when needed or may be displayed in response to an operation of the input unit 24. A list of downloadable libraries is displayed on the management screen D6. When a library is selected and an "Enable" button B6 is pressed, the authentication key input screen D7 illustrated in FIG. 9 is displayed on the display unit 20. The authentication key input screen D7 may be displayed in response to an operation of the input unit 24.

As illustrated in FIG. 9, an input portion B8 for inputting a character string of an authentication key is displayed on the authentication key input screen D7, and an end user inputs the character string of the authentication key into the input portion B8. The input portion B8 is, for example, a text box prompting input of a character string. In inputting the character string of the authentication key, the end user may directly input the character string of the authentication key notified from the development user into the input portion B8 by using the input unit 24. In a case where a "Load" button B7 is pressed, input of the character string of the authentication key may be performed such that a file selection screen (not illustrated) is displayed, a CSV format file including the character string of the authentication key is selected on the file selection screen, and the character string of the authentication key is automatically input into the input portion B8. Upon completion of input of the character string of the authentication key into the input portion B8, as illustrated in FIG. 10, a list B9 of libraries to be activated by the input authentication key is displayed below the input portion B8. The library list B9 is composed of, for example, letters, numbers, characters, shapes, and other items.

When an "Activate" button B12 on the authentication key input screen D7 is pressed and activation is successful, the notification screen D8 is displayed on the display unit 20 as illustrated in FIG. 11. On the notification screen D8, information indicating that the library activation has been successfully performed and a list of names of libraries that have been successfully activated, that is, an activated library list B10 is displayed. The activated library list B10 is composed of, for example, letters, numbers, characters, shapes, and other items.

The notification screen D8 may be displayed in response to an operation of the input unit 24.

Although description has been given of a case where the authentication key input screen D7 is displayed and then switches to the notification screen D8, the display of these screens is not limited thereto. For example, the authentication key input screen D7 and the notification screen D8 may be displayed simultaneously in different areas of the display unit 20, may be displayed at any timing, or may be displayed such that the notification screen D8 overlaps a portion of the authentication key input screen D7, for example, as a pop-up screen in a small window.

On the other hand, when the activation of the library fails, that is, when the library corresponding to the authentication key input into the input portion B8 is absent, as illustrated in FIG. 12, a failure notification message B11 indicating that the activation of the library has failed is displayed below the input portion B8 on the authentication key input screen D7. The failure notification message B11 may be composed of, for example, any combination of letters, numbers, characters, shapes, and other items.

As described above, while obtaining necessary information by viewing the management screen D6, the authentication key input screen D7, and the notification screen D8 displayed on the display unit 20 of the user device 2, the end user sequentially performs input operations and the like based on the information. This enables easy and accurate operations, improving convenience.

As described above, in the library creation apparatus 3 and the library creation system 100, the library creation apparatus 3 acquires license information to be given to a library from the server 1 and creates the library. Next, the library creation apparatus 3 acquires an authentication key for activating the library based on the identification information. Then, the library creation apparatus 3 outputs the library and the authentication key to the user device 2. With such a configuration, the library creation apparatus 3, that is, the development user can directly grasp and manage a device to which the library has been distributed. This enables provision of a sound use environment for a library while inhibiting unauthorized use and misuse of the library.

The library creation apparatus 3 includes the license information acquisition unit 312 that acquires license information, which is a license code, to be given to a library from the server 1, which is an exemplary external device; the display unit 30, as the first display unit, that displays the setting input screen D1 for inputting a setting of the license information and displays the identification information input screens D2 and D3 for inputting identification information of the user device 2, which is an exemplary device that uses the library; the library creation unit 313 that creates the library in accordance with content input on the setting input screen D1; and the authentication key acquisition unit 314 that acquires an authentication key for activating the library based on the identification information. As a result, a creator of the library, that is, a development user can directly grasp and manage a device to which the library has been distributed and can perform more appropriate and highly safe management. This enables improvement in safety and soundness by inhibiting unauthorized use, misuse, and the like of the library, and enables provision of a sound use environment for the library.

In addition, the library includes a teaching program for teaching a robot, and the identification information is the serial number of a robot controller that controls the robot. Thus, activation of the library to be applied to execution processing of the robot controller can be determined, and advantages of the present disclosure can be applied to the robot controller.

The library creation system 100 includes the library creation apparatus 3 described above and the user device 2, which is an exemplary device that uses the library. As a result, the creator of the library, that is, the development user can directly grasp and manage a device to which the library has been distributed and can perform more appropriate and highly safe management. This enables improvement in safety and soundness by inhibiting unauthorized use, misuse, and the like of the library, and enables provision of a sound use environment for the library. The library creation system 100 configured in such a manner has excellent convenience in the entire system.

The user device 2, which is an exemplary device, includes the display unit 20 as the second display unit that displays the authentication key input screen D7 for inputting the authentication key acquired from the library creation apparatus 3, and the controller 21 as a processing unit that activates the library based on the authentication key input on the authentication key input screen D7. Thus, the library created by the library creation apparatus 3 can be used by the user device 2. This improves operability and convenience for an end user and contributes to improvement in convenience of the entire system.

Next, with reference to the flowchart illustrated in FIG. 13, an exemplary library creation method of the present disclosure will be described. In the following description, the development user and the library creation apparatus 3 are treated as subjects.

First, in step S101 (first step), license information to be given to a library, that is, a license code, is acquired from the server 1. This step is executed by the license information acquisition unit 312.

Next, in step S102 (second step), the setting input screen D1 (refer to FIG. 3) for inputting settings of the license information is displayed on the display unit 30. This step is executed by the display controller 311.

Next, in step S103 (third step), a library is created in accordance with content input on the setting input screen. That is, processing of embedding the license information set on the setting input screen D1 into the library is performed. This step is executed by the library creation unit 313.

Next, in step S104 (fourth step), the identification information input screens D2 and D3 for inputting identification information of devices that use the library are displayed on the display unit 30 (refer to FIGS. 4 and 5). This step is executed by the display controller 311.

Then, in step S105 (fifth step), an authentication key for activating the library based on the identification information is acquired. That is, identification information of the user device 2 input from the identification information input screens D2 and D3 is acquired. This step is executed by the authentication key acquisition unit 314. In the present embodiment, the authentication key acquisition unit 314 creates an authentication key based on the identification information.

Next, in step S106 (sixth step), the library created in step S103 and the authentication key acquired in step S105 are output. That is, the library and the authentication key are output in response to an operation of the input unit 34 performed by the development user. Alternatively, for example, the library and the authentication key may be output when the "Export as CSV" button B4 on the output operation screen D4 illustrated in FIG. 6 is pressed. This step is executed by the communication unit 33.

Next, in step S107 (seventh step), the management screen D5 is displayed on the display unit 30. As a result, information such as license types, the license code, and License Usage can be grasped. This step is executed by the display controller 311.

The execution order of the first step, the second step, the third step, the fourth step, the fifth step, the sixth step, and the seventh step exemplified in the present embodiment is not limited to the order shown in the flowchart illustrated in FIG. 13. It is sufficient that the third step and the fifth step be completed before the sixth step is executed.

As described above, the library creation method includes the first step of acquiring, from the server 1, which is an exemplary external device, license information to be given to a library; the second step of displaying a setting input screen for inputting settings of the license information; the third step of creating the library in accordance with content input on the setting input screen; the fourth step of displaying identification information input screens for inputting identification information of a user device, which is an exemplary device that uses the library; and the fifth step of acquiring an authentication key for activating the library based on the identification information. As a result, a creator of the library, that is, a development user, can directly grasp and manage a device to which the library has been distributed, and more appropriate and highly safe management can be performed. This enables improvement in safety and soundness by inhibiting unauthorized use, misuse, and the like of the library, and enables provision of a sound use environment for the library.

The library creation method further includes the sixth step of outputting the library created in the third step and the authentication key acquired in the fifth step. Thus, the created library can be distributed together with the authentication key to, for example, an end user. This enables the effects described above to be more remarkably exhibited.

In the sixth step, the output operation screen D4 for performing an operation of acquiring an authentication key is displayed. As a result, the development user can distribute the library and the authentication key at a desired timing. This enables the effects described above to be more remarkably exhibited.

In the sixth step, the authentication key is output in a file format. As a result, usability can be improved.

On the output operation screen D4 illustrated in FIG. 6, information on the acquired authentication key is displayed. As a result, the authentication key can be checked, and the development user can then distribute the library and the authentication key at a desired timing.

In the fifth step, the identification information input in the fourth step is transmitted to the server 1, which is an exemplary external device, and the authentication key created by the server 1 is acquired from the server 1. Thus, the server 1 can also manage the authentication key. Therefore, more appropriate and highly safe management can be performed.

The library creation method includes the seventh step of displaying the management screen D5 for managing the license information acquired in the first step. As a result, the creator of the library, that is, a development user, can more effectively grasp and manage a device to which the library has been distributed. This enables the effects described above to be more remarkably exhibited.

On the management screen D5, information on a number of remaining licenses that can be embedded in the library is displayed. As a result, the number of remaining licenses that can be embedded in the library can be grasped, and a timing at which new license information is to be acquired from the server 1 can be estimated. This improves convenience.

Although the library creation method, the library creation apparatus, and the library creation system according to the present disclosure have been described with reference to the embodiments illustrated in the drawings, the present disclosure is not limited thereto. In addition, each component or each step of the library creation method, the library creation apparatus, and the library creation system may be replaced with any component or step that can exhibit the same function, or any component or step may be added.

## Claims

1. A method for creating a library, comprising:
a first step of acquiring, from an external device, license information to be given to a library;
a second step of displaying a setting input screen for inputting a setting of the license information;
a third step of creating the library in accordance with content input on the setting input screen;
a fourth step of displaying an identification information input screen for inputting identification information of a device that uses the library; and
a fifth step of acquiring an authentication key for activating the library based on the identification information.

2. The method according to claim 1, further comprising a sixth step of outputting the library created in the third step and the authentication key acquired in the fifth step.

3. The method according to claim 2, wherein, in the sixth step, an output operation screen for performing an operation of acquiring the authentication key is displayed.

4. The method according to claim 2, wherein, in the sixth step, the authentication key is output in a file format.

5. The method according to claim 3, wherein the output operation screen displays information on the acquired authentication key.

6. The method according to claim 1, wherein, in the fifth step, the identification information input in the fourth step is transmitted to the external device, and the authentication key created by the external device is acquired from the external device.

7. The method according to claim 1, further comprising a seventh step of displaying a management screen for managing the license information acquired in the first step.

8. The method according to claim 7, wherein the management screen displays information on a number of remaining licenses capable of being embedded in the library.

9. An apparatus for creating a library, comprising:
a license information acquisition unit configured to acquire, from an external device, license information to be given to a library;
a first display unit configured to display a setting input screen for inputting a setting of the license information, and to display an identification information input screen for inputting identification information of a device that uses the library;
a creation unit configured to create the library in accordance with content input on the setting input screen; and
an authentication key acquisition unit configured to acquire an authentication key for activating the library based on the identification information.

10. The apparatus according to claim 9, wherein
the library includes a teaching program for teaching a robot, and
the identification information is a serial number of a robot controller for controlling the robot.

11. A system for creating a library, comprising:
the apparatus according to claim 9; and
the device that uses the library.

12. The system according to claim 11, wherein the device includes
a second display unit configured to display an authentication key input screen for inputting an authentication key acquired from the apparatus, and
a processing unit configured to activate the library based on the authentication key input on the authentication key input screen.
